# EUROPÄISCHE PATENTSCHRIFT

(11) **EP 1 430 644 B1**
(45) Veröffentlichungstag und Bekanntmachung des Hinweises auf die Patenterteilung: **31.10.2018**
(21) Anmeldenummer: 02774417.6
(22) Anmeldetag: 25.09.2002
(51) Int. Cl.: H04M 3/493, H04M 3/42

(54) **VERFAHREN ZUR VERBESSERUNG DER ERREICHBARKEIT VON TEILNEHMERN, KOMMUNIKATIONSSYSTEM UND KOMMUNIKATIONRRICHTUNG**
METHOD FOR ENHANCING REACHABILITY OF USERS, COMMUNICATION SYSTEM AND COMMUNICATION DEVICE
PROCEDE D'AMELIORATION DE L'ACCESSIBILITE DES UTILISATEURS, SYSTEME DE COMMUNICATION ET DISPOSITIF DE COMMUNICATION

(30) Priorität: 27.09.2001 DE 10147770
(43) Veröffentlichungstag der Anmeldung: 23.06.2004
(73) Patentinhaber: Siemens Aktiengesellschaft, 80333 München (DE)
(72) Erfinder: JERBI, Belhassen, 85551 Kirchheim (DE); LAUMEN, Josef, 31141 Hildesheim (DE)
(86) Internationale Anmeldenummer: PCT/DE2002/003632
(87) Internationale Veröffentlichungsnummer: WO 2003/030450

(56) Entgegenhaltungen:
- EP-A- 1 117 263
- CA-A- 2 281 147
- US-A- 5 742 905
- SILVER ANDREW, LARKINS JOHN, STRINGER DAVE: "Unified Network Presence Management" [Online] 2000 , NORTEL NETWORKS XP002236527 Gefunden im Internet: <URL: http://www.mobilein.com/UNPM.pdf> [gefunden am 2003-03-28] Seite 4 Seite 6, Absatz 1

## Beschreibung

Die vorliegende Erfindung betrifft ein Verfahren zur Verbesserung der Erreichbarkeit von Teilnehmern eines Kommunikationssystems. Ferner betrifft die vorliegende Erfindung ein Kommunikationssystem und eine Kommunikationsvorrichtung zum Umsetzen des Verfahrens.

Herkömmliche Anwendungen, insbesondere gemäß dem GSM-(Global System for Mobile Communication)-Standard, erfolgen ohne Kenntnis des Zustands des Kommunikationspartners. Ein Anruf wird getätigt, eine Kurznachricht (Short Message bzw. SM) im Rahmen des SMS-(Short Message Service)-Dienstes oder eine Multimedianachricht (Multimedia Message) des MMS-(Multimedia Message Service)-Dienstes werden gesendet, ohne dass der Initiator (Anrufender oder SMS-/MMS-Sender) Kenntnis über den Status des Empfängers (Angerufener oder SMS-/MMS-Adressat) hat, d.h. insbesondere unabhängig davon, ob das Benutzerendgerät des Empfängers überhaupt eingeschaltet ist. Als nachteilig stellt sich dabei heraus, dass der Initiator sich also nicht sicher sein kann, ob der Empfänger beispielsweise eine dringende Nachricht überhaupt erhält.

In Japan wird im Rahmen des i-Mode ein Dienst in der Mobilfunkumgebung mit der Bezeichnung "E-mail" eingesetzt, der aber mit der Internet-E-mail nichts zu tun hat. Dieser Dienst wird wie Chat oder Instant Messaging (unter "Instant Messaging" versteht man den sofortigen Austausch von Textnachrichten mittels "Instant Messaging and Presence"-Diensten, der auf der Basis von Anwesenheitsinformationen bzw. Präsenzinformationen vorgenommen wird) verwendet, siehe RFC 2778 "A Model for Presence and Instant Messaging", M. Day, J. Rosenberg, H. Sugano, February 2000 (http://www.ietf.org/rfc/rfc2778.txt?number=2778) und RFC 2779 "Instant Messaging / Presence Protocol Requirements", M. Day, S. Aggarwal, G. Mohr, J. Vincent, February 2000 (http://www.ietf.org/rfc/rfc2779.txt?number=2779). Es handelt sich um ein anwesenheitsorientiertes Kommunikationsmittel, welches dem Nutzer unter einem ganz eigenen Standard ermöglicht, Nachrichten und Anwesenheitsmitteilungen auszutauschen. Dabei werden die von einem Nutzer ausgewählten Kommunikationspartner auf der Anzeige des Nutzermobiltelefons mit ihrem entsprechenden Status aufgelistet. Bei jedem ausgewählten Teilnehmer kann der Nutzer den aktuellen Status erfahren, beispielsweise ob der i-Mode-Anwender über sein Mobiltelefon erreichbar ist oder nicht. Zu dem werden Stimmungsbilder (glücklich, beschäftigt, usw.) zwischen Nutzern ausgetauscht.

Als nachteilig bei einem derartigen Kommunikationsdienst stellt sich heraus, dass in dem Fall, bei dem der Nutzer die Informationen erhält, dass sein ausgewählter Teilnehmer derzeit über sein Mobiltelefon nicht erreichbar ist, er keine Möglichkeit hat, den ausgewählten Teilnehmer über ein alternatives Kommunikationsmedium bzw. Kommunikationsmittel zu erreichen, um diesem beispielsweise eine dringende Nachricht zu übermitteln.

Es ist somit die Aufgabe der vorliegenden Erfindung, ein Verfahren und Vorrichtungen zu schaffen, durch die die Erreichbarkeit eines ausgewählten Teilnehmers verbessert wird.

Diese Aufgabe wird hinsichtlich des Verfahrens durch die Merkmale des Anspruchs 1 und hinsichtlich eines Kommunikationssystems durch die Merkmale von Anspruch 23 und hinsichtlich einer Kommunikationsvorrichtung durch die Merkmale des Anspruchs 29 gelöst. Vorteilhafte Ausgestaltungen der Erfindung sind Gegenstand der Unteransprüche.

Bei dem Verfahren gemäß der vorliegenden Erfindung werden Kommunikationsinformationen bezüglich einer ersten Kommunikationseinheit eines ersten Benutzers über ein dieser zugeordnetes Kommunikationssystem bereitgestellt, wobei die Kommunikationsinformationen Angaben über Kommunikationsmöglichkeiten aufweisen, über die eine Kommunikationsverbindung mit der ersten Kommunikationseinheit herstellbar ist. Dadurch, dass die Kommunikationsinformationen Angaben über sämtliche oder bestimmte Kommunikationsmöglichkeiten beinhalten, über die mit der ersten Kommunikationseinheit kommuniziert werden kann, ist es möglich, dass ein weiterer Benutzer, der anhand der Kommunikationsinformationen erkennt, dass eine bestimmte Kommunikationsmöglichkeit nicht verfügbar ist, eine bestimmte alternative Kommunikationsmöglichkeit wählen kann. Somit kann im Gegensatz zum Stand der Technik, bei dem von dem Kommunikationssystem nur die Information erhalten werden kann, ob ein bestimmter Teilnehmer bzw. Benutzer telefonisch erreichbar ist oder nicht, zusätzlich angezeigt werden, welche weiteren Kommunikationsmöglichkeiten zum Aufbau einer Kommunikationsverbindung mit einem ausgewählten Teilnehmer bzw. Benutzer zur Verfügung stehen, um beispielsweise eine dringende Nachricht an diesen zu versenden.

Die begriffliche Trennung zwischen Kommunikationsvorrichtung und Kommunikationsmittel soll an folgendem Beispiel verdeutlicht werden. Ein "Telefon" ist eine Kommunikationsvorrichtung, "Telefonie" dagegen ist ein Kommunikationsmedium bzw.

Kommunikationsmittel. Mit einem klassischen Festnetztelefon ist nur Telefonie möglich, eine Kommunikationsvorrichtung "Mobiltelefon" dagegen unterstützt bereits heute i.d.R. mindestens zwei Kommunikationsmittel: "Telefonie" und "SMS".

Unter dem Begriff Kommunikationseinheit sei, wie oben bereits erwähnt, die Gesamtheit der einem Benutzer zur Verfügung stehenden Kommunikationsvorrichtungen, d.h. im geringsten Fall nur eine Kommunikationsvorrichtung, zu verstehen. Dabei sind unter dem Begriff Kommunikationsvorrichtung sämtliche Teilnehmerendgeräte bzw. Benutzerendgeräte zu verstehen, mittels denen ein Benutzer über einen Kommunikationsdienst eine Kommunikationsverbindung zu einer weiteren Kommunikationsvorrichtung einer weiteren Kommunikationseinheit herstellen kann. Die Kommunikationsvorrichtungen können dabei ein Mobiltelefon, ein Festnetztelefon, ein Faxgerät, einen tragbaren Computer, einen stationären Computer, einen Pager usw. beinhalten. Insbesondere, wenn gemäß einer vorteilhaften Ausgestaltung der ersten Kommunikationseinheit eine Mehrzahl von ersten Kommunikationsvorrichtungen zugeordnet werden, die in den Angaben über Kommunikationsmöglichkeiten dargestellt werden, ist es möglich, dass ein Benutzer, der mit der ersten Kommunikationseinheit in Kontakt treten möchte, seine Kommunikation auf die bestimmten Kommunikationsvorrichtungen, die vorteilhafter Weise verschiedene Typen beinhalten, anpassen kann. Stellt beispielsweise ein Benutzer fest, dass der ersten Kommunikationseinheit eine Kommunikationsvorrichtung zugeordnet ist, die für das Versenden bzw. Empfangen von Multimedia-Nachrichten ausgelegt ist, so kann der Benutzer an die erste Kommunikationseinheit eine Multimedia-Nachricht senden, wenn diese als am geeignetsten angesehen wird.

Gemäß einer vorteilhaften Ausgestaltung sind jeder der (ersten) Kommunikationsvorrichtungen jeweils ein oder mehrere Kommunikationsmittel zugeordnet, die in den Angaben über Kommunikationsmöglichkeiten dargestellt werden. Die Gesamtheit der Kommunikationsvorrichtungen in Verbindung mit den jeweiligen zugeordneten Kommunikationsmitteln ergeben dann die Kommunikationsmöglichkeiten einer Kommunikationseinheit. Unter dem Begriff Kommunikationsmittel bzw. Kommunikationsmedium sind sämtliche Dienste zu verstehen, über die Kommunikationsvorrichtungen miteinander kommunizieren können, wie beispielsweise Telefonie, Fax, E-mail, SMS, MMS, Instant Messaging, usw. Damit diese Kommunikationsmittel eindeutig angesprochen werden können, wird jedem der Kommunikationsmittel eine Kommunikationsadresse zugeordnet, die ebenso in den Angaben über Kommunikationsmöglichkeiten dargestellt wird. Vorteilhafterweise wird jedem der Kommunikationsmittel eine Erreichbarkeitsinformation zugeordnet, die angibt, ob zum aktuellen Zeitpunkt eine Kommunikationsverbindung über das jeweilige Kommunikationsmittel mit der (ersten) Kommunikationseinheit herstellbar ist, wobei die Erreichbarkeitsinformation in den Angaben über Kommunikationsmöglichkeiten dargestellt wird. Die Erreichbarkeitsinformation kann beispielsweise Werte wie "erreichbar" ("online"), "nicht erreichbar" (offline"), usw. enthalten. Ferner kann der Erreichbarkeitsinformation ein Darstellungsattribut zugeordnet sein, das angibt, auf welche Weise die Darstellung der Erreichbarkeitsinformation bzw. des zugeordneten Kommunikationsmittels und/oder der zugeordneten Kommunikationsvorrichtung erfolgen soll, wenn die Kommunikationsinformationen auf einer Anzeige einer Kommunikationsvorrichtung eines weiteren Benutzers angezeigt werden sollen (farblich hervorgehoben, durch Unterstreichung gekennzeichnet, durch Kursivschrift gekennzeichnet usw.).

Gemäß einer vorteilhaften Ausgestaltung der Erfindung wird einem oder mehreren der (ersten) Kommunikationsmittel eine Präferenzinformation zugeordnet, die angibt, über welches Kommunikationsmittel bevorzugter Weise eine Kommunikationsverbindung zu der (ersten) Kommunikationseinheit herzustellen ist, wobei die Präferenzinformation wiederum in den Angaben über Kommunikationsmöglichkeiten dargestellt wird. Somit kann der (erste) Benutzer der ersten Kommunikationseinheit nicht nur die möglichen Kommunikationsmöglichkeiten angeben, über die er erreichbar ist, sondern er kann ferner bestimmen, über welches Kommunikationsmittel und/oder über welche Kommunikationsadresse, d.h. und somit auch über welche Kommunikationsvorrichtung, von einem weiteren Benutzer eine Kommunikationsverbindung bevorzugt herzustellen ist. Beispielsweise könnte der erste Benutzer bevorzugen, ihn tagsüber im Büro über die Kommunikationsmittel "Telefonie" über sein "Festnetztelefon" und über "Instant Messaging" über den "stationären Computer" zu kontaktieren, da er ganztags am Schreibtisch in seinem Büro arbeitet. In der Freizeit hingegen kann er bevorzugen, über das Kommunikationsmittel "Telefonie" über sein privates "Mobiltelefon" von einem anderen Benutzer angerufen zu werden.

Gemäß einer weiteren vorteilhaften Ausgestaltung können die Kommunikationsinformationen der ersten Kommunikationseinheit ferner Benutzerinformationen bezüglich des der ersten Kommunikationseinheit zugeordneten Benutzers aufweisen. Diese Benutzerinformationen können beispielsweise Angaben über den körperlichen oder geistigen Zustand (glücklich, gestreßt, krank usw.) des Benutzers enthalten. Die Benutzerinformationen können beispielsweise in der Form eines Textes und/oder eines entsprechendes Piktogramms dargestellt werden.

Gemäß einer weiteren vorteilhaften Ausgestaltung kann eine Auswahl von bestimmten (ersten) Kommunikationsvorrichtungen und/oder eine Auswahl von bestimmten (ersten) Kommunikationsmitteln und/oder die Benutzerinformationen in einem Präsenz-Profil (Presence-Profile) zusammengefasst werden, die zur Abfrage durch eine weitere Kommunikationseinheit freigegeben werden. Das bedeutet, es kann eine Untermenge bzw. eine bestimmte Kombination der zur Verfügung stehenden möglichen Kommunikationsinformationen der (ersten) Kommunikationseinheit von dem ersten Benutzer in dem Präsenz-Profil hinterlegt werden. Um somit bestimmte Kommunikationsinformationen zur "Veröffentlichung" bzw. zur Abfrage von einer weiteren Kommunikationseinheit freizugeben, muss der Benutzer der ersten Kommunikationseinheit ein bestimmtes Präsenz-Profil nur aktivieren, und nicht erst bestimmte Kommunikationsinformationen manuell zusammenstellen.

Die sich bei der Definition eines Präsenz-Profils ergebenen Vorteile sollen nun auf eine andere Weise erläutert werden. Während ein Benutzer, der mit einem weiteren Benutzer in Kontakt treten möchte, über einen herkömmlichen Präsenz-Dienst nur die Information erhält, ob der weitere Benutzer über sein Teilnehmerendgerät "erreichbar" oder "nicht erreichbar" ist, so erhält der Benutzer gemäß der vorliegenden Erfindung weitere Informationen bzw. Kommunikationsinformationen, die angeben, welche weiteren Kommunikationsvorrichtungen oder Kommunikationsmittel dem weiteren Benutzer zur Verfügung stehen. Somit werden gemäß der vorliegenden Erfindung dynamische Informationen, die beispielsweise die Erreichbarkeit eines Benutzers betreffen, mit statischen Informationen, die die dem Benutzer zur Verfügung stehenden Kommunikationsvorrichtungen betreffen, kombiniert. Betrachtet man nun einen Benutzer, dem eine Vielzahl von Kommunikationsvorrichtungen bzw. Teilnehmerendgeräte zur Verfügung stehen, wie beispielsweise ein erstes Festnetztelefon, ein erster stationärer Computer, ein erstes Faxgerät und ein erstes Mobiltelefon im Büro, sowie ein zweites Festnetztelefon, ein zweiter stationärer Computer und ein zweites Mobiltelefon zu hause bzw. in der Freizeit, so werden zumindest die mit dem Telefonnetz verbundenen Kommunikationsvorrichtungen, wie die Festnetztelefone oder das Faxgerät normalerweise stets das Attribut "erreichbar" bzw. "online" erhalten. Wie also zu sehen ist, genügen die dynamischen Informationen bezüglich der Erreichbarkeit in Verbindung mit den statischen Informationen bezüglich der verfügbaren Kommunikationsvorrichtungen nicht, um die "tatsächliche" Erreichbarkeit eines Benutzers anzugeben. Vielmehr ist die "tatsächliche" Erreichbarkeit an "quasi-statische" Bedingungen geknüpft, wie beispielsweise die Tageszeit, den Aufenthaltsort des Benutzers usw. Tagsüber beispielsweise wird sich der Benutzer mit hoher Wahrscheinlichkeit in seinem Büro befinden, wo ihm, wie oben bereits erwähnt, das erste Festnetztelefon, der erste stationäre Computer, das erste Faxgerät oder das erste Mobiltelefon zur Verfügung stehen, während er sich abends oder wochenends wahrscheinlich zu hause aufhält, wo er über das zweite Festnetztelefon, den zweiten stationären Computer oder das zweite Mobiltelefon erreichbar sein wird. Um also diese "quasi-statischen" Bedingungen zu berücksichtigen, kann der Benutzer einer Kommunikationseinheit bestimmte Kommunikationsvorrichtungen bzw. bestimmte Kommunikationsmittel in Präsenz-Profilen zusammenfassen, die es ermöglichen, dass die Erreichbarkeit des Benutzers an bestimmten Orten oder zu bestimmten Zeiten sichergestellt oder verbessert wird. So kann beispielsweise ein Präsenz-Profil definiert werden, das speziell die Erreichbarkeit eines Nutzers tagsüber oder im Büro angibt, oder es kann ein Präsenz-Profil definiert werden, das die Erreichbarkeit des Benutzers abends oder in der Freizeit angibt. Wie bereits erwähnt, muss dann zur Bereitstellung der ortspezifischen oder tageszeitspezifischen Informationen nur ein entsprechendes Präsenz-Profil aktiviert und später wieder deaktiviert werden.

Gemäß einer weiteren vorteilhaften Ausgestaltung können die von der ersten Kommunikationseinheit bereit gestellten Kommunikationsinformationen von einer zweiten Kommunikationseinheit eines zweiten Benutzers über das Kommunikationssystem abgefragt, übertragen, und/oder verarbeitet werden. Insbesondere kann das erfindungsgemäße Verfahren allgemein in ein Verfahren zum Herstellen einer Kommunikationsverbindung integriert werden. Nachdem der erste Benutzer die ihm zugeordneten Kommunikationsinformationen bezüglich ihm zur Verfügung stehender Kommunikationsmöglichkeiten im Kommunikationssystem bereitgestellt hat, können diese Kommunikationsinformationen von einem zweiten Benutzer abgefragt und analysiert werden. Anschließend kann der zweite Benutzer eine Auswahl treffen, welche dem ersten Benutzer zur Verfügung stehenden Kommunikationsmöglichkeit er nutzen möchte, um eine Kommunikationsverbindung aufzubauen. Eine Kommunikationsverbindung kann dann realisiert werden, indem beispielsweise eine Telefonverbindung von dem zweiten zu dem ersten Benutzer etabliert wird, oder indem allgemein Daten bzw. Nachrichten beliebiger Art zwischen beiden Benutzern bzw. deren zugeordneten Kommunikationseinheiten übertragen werden. Die Nachrichten können in Form eines Textes, von Sprache, einer Audio-Nachricht, Bild-Nachricht, einer Video-Nachricht, einer Kurznachricht (gemäß dem SMS) einer Multimedia-Nachricht (gemäß dem MMS) usw. vorliegen.

Damit der Benutzer der zweiten Kommunikationseinheit nur Kommunikationsinformationen der ersten Kommunikationseinheit oder weiterer Kommunikationseinheiten erhält, die an die ihn zur Verfügung stehenden Kommunikationsvorrichtungen bzw. Kommunikationsmittel angepasst sind, ist es vorteilhaft, wenn der Benutzer der zweiten Kommunikationseinheit ein Übertragungs-Profil ("Watcher-Profil") definiert, in dem eine Auswahl bestimmter Kommunikationsvorrichtungen und/oder Kommunikationsmittel und/oder Benutzerinformationen angegeben sind, über die Angaben aus den Kommunikationsinformationen der ersten oder weiteren Kommunikationseinheiten zu der zweiten Kommunikationseinheit übertragen werden sollen. Das heißt, der Benutzer der zweiten Kommunikationseinheit kann eine Untermenge bzw. eine bestimmte Kombination ausgewählter Kommunikationsinformationen in dem Übertragungs-Profil zusammenfassen, über die er informiert/benachrichtigt werden möchte. Insbesondere wenn der Benutzer der ersten Kommunikationseinheit über eine Vielzahl von möglichen Kommunikationsvorrichtungen und Kommunikationsmitteln verfügt, dem Benutzer der zweiten Kommunikationseinheit aber lediglich eine eingeschränkte Menge der Kommunikationsvorrichtungen oder Kommunikationsmittel zur Verfügung steht, so kann der Benutzer der zweiten Kommunikationseinheit sein Übertragungsprofil derart einstellen, dass an ihn lediglich solche Kommunikationsinformationen übertragen werden, die seinem "Leistungsvermögen" entsprechen. Weist die zweite Kommunikationseinheit lediglich ein Mobiltelefon auf, das Telefonie- und SMS-Fähigkeiten besitzt, so wird das der zweiten Kommunikationseinheit zugeordnete Übertragungsprofil vorteilhafterweise nur Angaben über derartige Kommunikationsvorrichtungen bzw. Kommunikationsmittel enthalten.

Es ist jedoch auch denkbar, dass einer Kommunikationseinheit eine Mehrzahl von Übertragungsprofilen zugeordnet wird, die in Analogie zu den Präsenz-Profilen an gewisse "quasi-statische" Bedingungen den Benutzer der jeweiligen Kommunikationseinheit betreffend angepasst sind. So ist es auch hier wiederum möglich, dass der Benutzer der zweiten Kommunikationseinheit entsprechend der Tageszeit oder seinem Aufenthaltsort ein jeweiliges Übertragungs-Profil definiert. Befindet er sich beispielsweise im Büro, wo ihm ein Fax-Gerät zur Verfügung steht, so wird er in einem Übertragungs-Profil, das tagsüber aktiviert werden soll, den Fax-Dienst als Kommunikationsmittel in dem Übertragungs-Profil vorsehen, während er für abends oder für seine Freizeit, wo ihm kein Fax-Gerät zur Verfügung steht, ein weiteres Übertragungs-Profil definiert, welches den Fax-Dienst nicht beinhalten wird.

Es ist ferner denkbar, dass auch der ersten Kommunikationseinheit, der schon ein oder mehrere Präsenz-Profile zugeordnet sind, auch ein oder mehrere Übertragungs-Profile zugeordnet werden, in Übereinstimmung mit den Übertragungs-Profilen, die der zweiten Kommunikationseinheit zugeordnet sind.

Gemäß einer weiteren vorteilhaften Ausgestaltung werden der ersten Kommunikationseinheit ein oder mehrere Anwender-Profile ("Client-Profile") zugeordnet, die jeweils aus einem bestimmten Präsenz-Profil und einem bestimmten Übertragungs-Profil bestehen. Durch diese Definition eines Anwender-Profils kann der Benutzerkomfort weiter erhöht werden, da ein Benutzer auf einfache Weise und mit geringem Aufwand die bereitzustellenden und abzufragenden Daten an quasi-statische Bedingungen, wie an die Tageszeit bzw. Aufenthaltsort anpassen kann. Zusammenfassend kann also gesagt werden, dass durch die Definition und Verwendung von bestimmten Profilen, wie dem Präsenz-Profil, dem Übertragungs-Profil oder dem Anwender-Profil, unter Verwendung von geringen Ressourcen schnell und einfach bereitzustellende bzw. abzufragende Kommunikationsinformationen geändert werden können. Ferner kann ein Befehl zur Aktivierung oder Deaktivierung eines vordefinierten Profils wesentlich kompakter codiert werden als dies der Fall wäre, wenn die gesamte Kommunikationsinformation codiert werden sollte. Letzteres ist insbesondere bei Mobilfunksystemen und hier verstärkt im Fall eines Roamings von Vorteil, wo Ressourcen in Bezug auf die Luftschnittstelle besonders teuer sind. Roaming tritt dann auf, wenn ein Mobilfunkteilnehmer in einem fremden Mobilfunknetz telefoniert und/oder Daten überträgt, d.h. sich in einem anderen Netz als dem des dem Teilnehmer zugeordneten Mobilfunknetzbetreibers befindet.

Sind die jeweiligen Präsenz-Profile und/oder Übertragungs-Profile und/oder Anwender-Profile für eine Kommunikationseinheit einmal bestimmt worden, so können sie gemäß einer weiteren vorteilhaften Ausgestaltung der Erfindung in einer Komponente des Kommunikationssystems, dem die entsprechende Kommunikationseinheit zugeordnet ist, gespeichert werden. Die jeweiligen Profile können dann zur Bereitstellung oder zur Abfrage bestimmter Kommunikationsinformationen über das Kommunikationssystem direkt von einem Benutzer der entsprechenden Kommunikationseinheit ausgewählt bzw. aktiviert oder auch wieder deaktiviert werden. Ferner ist es möglich, dass die Profile von dem Kommunikationssystem selbst, d.h. automatisch nach einem bestimmten Kriterium ausgewählt werden, wobei das Kriterium die Tageszeit, den Wochentag oder den Aufenthaltsort des einer bestimmten Kommunikationseinheit zugeordneten Benutzers aufweist. Dabei kann der Aufenthaltsort bestimmt werden, indem das Kommunikationssystem überwacht, von welcher der Kommunikationsvorrichtungen einer Kommunikationseinheit eine Kommunikationsverbindung aufgebaut wird oder werden soll. Wird beispielsweise von einem Festnetztelefon in einem Büro eines Benutzers ein Telefongespräch geführt, so kann das Kommunikationssystem sofort alle "Büro"-Profile des entsprechenden Benutzers bzw. dessen Kommunikationseinheit aktivieren, auch wenn zum aktuellen Zeitpunkt des Telefongesprächs nicht der richtige Wochentag (beispielsweise Samstag oder Sonntag) oder die Tageszeit (beispielsweise 23:00 Uhr) für die Aktivierung der "Büro"-Profile vorliegt.

Entsprechend der verwendeten Kommunikationsvorrichtungen kann das Kommunikationssystem ein Kommunikationsnetz, wie ein Mobilfunknetz, ein Telefonnetz und/oder ein internetprotokollbasiertes Kommunikationsnetz, aufweisen. Das Mobilfunknetz, sowie Kommunikationsvorrichtungen von Kommunikationseinheiten, die dem Mobilfunknetz zugeordnet sind, können nach dem GSM-, UMTS-(Universal Mobile Telecomunication System)-Standard usw. arbeiten. Gemäß einer vorteilhaften Ausgestaltung weist das Kommunikationssystem ferner einen "Instant Messaging and Presence"-Dienst bzw. "Sofort-Nachrichtenübermittlungs- und Präsenz"-Dienst auf, der die Kommunikationsinformationen einschließlich der verschiedenen definierten Profile von Kommunikationseinheiten verwaltet. Dieser Dienst kann ferner Kommunikationsverbindungen von Kommunikationseinheiten überwachen, um dynamische Informationen, wie Erreichbarkeitsinformationen, bei den Kommunikationsinformationen der jeweiligen Kommunikationseinheiten einzustellen, oder um , wie oben erwähnt, den Aufenthaltsort eines Benutzers einer Kommunikationseinheit festzustellen. Insbesondere um aus der Nutzung eines Mobiltelefons auf den aktuellen Aufenthaltsort des Nutzers zu schließen, kann das Kommunikationssystem eine Lokalisierung des Mobiltelefons dieses Benutzers durch Nutzung von Positionierungsdiensten des mobilen Funknetzes (z.B. eines UMTS-Netzes) durchführen.

Gemäß einem weiteren Aspekt der vorliegenden Erfindung wird ein Kommunikationssystem geschaffen, das insbesondere zum Umsetzen des erfindungsgemäßen Verfahrens geeignet ist und eine Komponente aufweist, in der Kommunikationsinformationen speicherbar sind, die Angaben über Kommunikationsmöglichkeiten aufweisen, über die eine Kommunikationsverbindung mit einer dem Kommunikationssystem zugeordneten ersten Kommunikationseinheit eines ersten Benutzers herstellbar ist.

Vorteilhafterweise sind in der Komponente des Kommunikationssytems ein oder mehrere Präsenz-Profile speicherbar, die aus einer der ersten Kommunikationseinheit zugeordneten Auswahl von Kommunikationsvorrichtungen und/oder einer Auswahl von Kommunikationsmitteln und/oder Benutzerinformationen über den ersten Benutzer bestehen, welche zur Abfrage durch eine weitere Kommunikationseinheit freigegeben werden. Ferner können in der einen Komponente des Kommunikationssystems ein oder mehrere Übertragungs-Profile speicherbar sein, in denen eine Auswahl bestimmter Kommunikationsvorrichtungen und/oder Kommunikationsmittel und/oder Benutzerinformationen angegeben sind, über die Angaben aus Kommunikationsinformationen einer anderen Kommunikationseinheit zur ersten Kommunikationseinheit übertragen werden sollen. Vorteilhafterweise sind in der einen Komponente ferner ein oder mehrere Anwender-Profile speicherbar, die jeweils aus einem bestimmten Präsenz-Profil und einem bestimmten Übertragungs-Profil bestehen.

Gemäß einer vorteilhaften Ausgestaltung weist das Kommunikationssystem eine Auswahleinrichtung auf, durch die eines oder mehrere der oben genannten Profile, die in der einen Komponente gespeichert sind, auswählbar bzw. aktivierbar und wieder deaktivierbar ist. Die Auswahleinrichtung kann eine Auswahl bzw. Aktivierung der Profile auf Anweisung des ersten Benutzers hin oder automatisch in Abhängigkeit der Tageszeit, des Wochentages, des Aufenthaltsorts des ersten Benutzers usw. durchführen.

Gemäß einem weiteren Aspekt der Erfindung wird eine Kommunikationsvorrichtung, insbesondere zum Umsetzen des erfindungsgemäßen Verfahrens geschaffen, die eine Einrichtung zur Übertragung von Kommunikationsinformationen einer Kommunikationseinheit zu und/oder von einem der Kommunikationseinheit zugeordneten Kommunikationssystem aufweist. Das bedeutet, dass mittels der Kommunikationsvorrichtung Kommunikationsinformationen einer Kommunikationseinheit zur Bereitstellung an das Kommunikationssystem übermittelt werden können und/oder andererseits Kommunikationsinformationen weiterer Kommunikationseinheiten vom Kommunikationssystem abgefragt und von diesem her übertragen werden können. Vorteilhafterweise hat die Kommunikationsvorrichtung ferner eine Einrichtung, in der die Kommunikationsinformationen verarbeitet bzw. angezeigt und verändert werden können. Außerdem ist es vorteilhaft, wenn die Kommunikationsvorrichtung eine Einrichtung zum Zusammenfassen bestimmter Kommunikationsinformation einer Kommunikationseinheit zu Profilen aufweist. Wurde eine Mehrzahl von Profilen definiert, so ist es vorteilhaft, wenn die Kommunikationsvorrichtung auch eine Einrichtung zum Auswählen bzw. Aktivieren eines oder mehrerer der Profile aufweist.

Bevorzugte Ausführungsformen der vorliegenden Erfindung werden nachfolgend bezugnehmend auf die beiliegenden Zeichnungen näher erläutert. Es zeigen:
Figur 1 eine schematische Darstellung der logischen Einheiten eines Präsenz-Dienstes;
Figur 2 eine schematische Darstellung einer ersten Kommunikationseinheit, die über ein Kommunikationssystem mit einer zweiten Kommunikationseinheit in Verbindung steht;
Figur 3 eine Darstellung der Kommunikationsinformationen einer einem Benutzer zugeordneten Kommunikationseinheit, die in einem Profil "Büro" zusammengefasst sind;
Figur 4 eine Darstellung von Kommunikationsinformationen einer einem Benutzer zugeordneten Kommunikationseinheit, die in einem Profil "Freizeit" zusammengefasst sind.

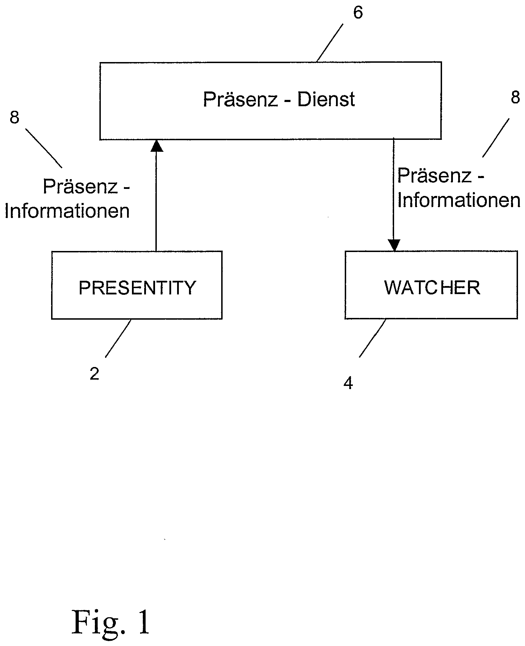

Bei einem Präsenzsystem gemäß einem generischen Rahmenmodell der IETF (Internet Engineering Task Force), wie es in Figur 1 dargestellt ist, werden Präsenzinformationen 8 zwischen einer ersten Einheit, der sogenannten "Presentity" 2 und einer zweiten Einheit, dem sogenannten "Watcher" 4 ausgetauscht. Die Präsenzinformationen geben dabei die Erreichbarkeit der Presentity bezüglich einer Kommunikationsvorrichtung über ein dieser zugeordnetes Kommunikationsmittel (beispielsweise Mobiltelefon über Telefonie) bzw. Stimmungsbilder der Presentity an. Die Presentity 2 ist eine Einheit, welche von einem Teilnehmer oder einem Anwendungsprogramm repräsentiert wird und Präsenzinformationen 8 über sich bereitstellt bzw. veröffentlicht. Der Watcher 4 ist eine Einheit, die ebenso von einem Teilnehmer oder einem Anwendungsprogramm repräsentiert wird und zum Empfangen von Präsenzinformationen 8 einer anderen Einheit bzw. einem anderen Teilnehmer dient. Die Presentity 2 stellt ihre Präsenzinformationen 8 über ein Kommunikationssystem bereit, das zur Übertragung der Präsenzinformationen bzw. zu deren Verwaltung einen Präsenzdienst 6 aufweist. Das Kommunikationssystem kann dabei ein oder mehrere Kommunikationsnetze umfassen, um eine Kommunikationsverbindung zwischen verschiedenen Kommunikationsvorrichtungen bzw. über verschiedene Kommunikationsmitteln zu ermöglichen, wie sie unter noch erläutert werden. Dabei können die Kommunikationsnetze durch spezielle Einrichtungen, wie "Gateways", miteinander verbunden sein. Der Watcher 4 (zweite Einheit) kann auf die Präsenzinformationen der Presentity 2 (erste Einheit) zugreifen, wobei ein Zugriff erst nach Überwinden bestimmter Sicherheitsvorkehrungen, wie eine Zugriffskontrolle oder eine Authentifizierung, gestattet ist. Zum einen kann der Watcher 4 aktiv und explizit die Präsenzinformationen der Presentity 2 erfragen oder abfragen, und zum anderen kann der Watcher 4 bei Änderung des Status der Präsenzinformationen der Presentity 2 von dem Präsenz-Dienst 6 hierüber benachrichtigt werden.

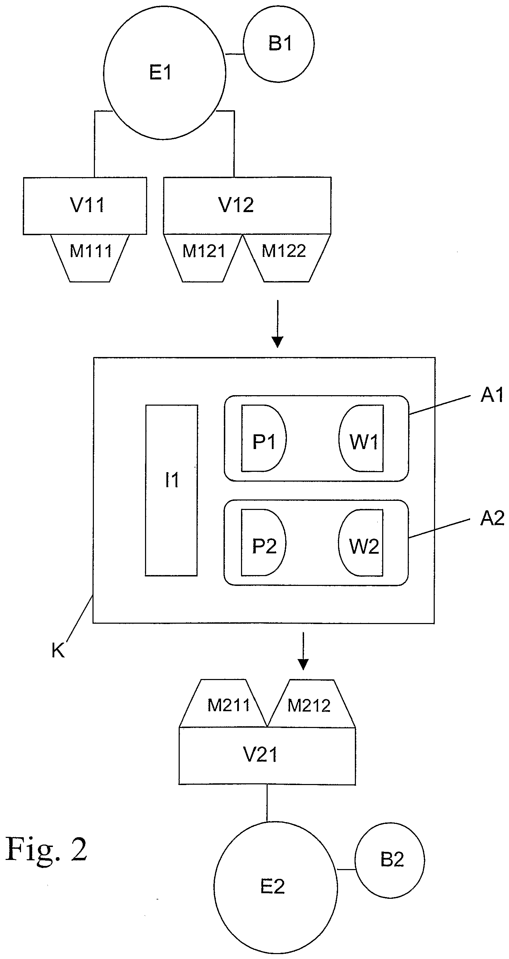

Dieses einfache bzw. abstrakte Präsenzsystem soll gemäß der vorliegenden Erfindung erweitert werden, wie es in Figur 2 schematisch gezeigt ist.

Wie es im oberen Abschnitt der Figur zu sehen ist, ist einem ersten Benutzer B1 eine erste Kommunikationseinheit E1 zugeordnet. Die Kommunikationseinheit E1 repräsentiert dabei die Gesamtheit der dem Benutzer B1 zur Verfügung stehenden Kommunikationsvorrichtungen, hier in diesem Fall die Vorrichtungen V11 und V12. Diese Kommunikationsvorrichtungen können beispielsweise einen stationären Computer, einen tragbaren Computer, ein Mobiltelefon oder ein Festnetztelefon umfassen.

Den Kommunikationsvorrichtungen V11 und V12 sind Kommunikationsmittel bzw. Kommunikationsmedien M111 bzw. M121 und M122 zugeordnet. Diese Kommunikationsmittel stehen für die Dienste, über die die erste Kommunikationseinheit E1 Informationen oder Nachrichten an ein Kommunikationssystem K oder über das Kommunikationssystem K an eine weitere Kommunikationseinheit übertragen bzw. von dem Kommunikationssystem K oder einer weiteren Kommunikationseinheit empfangen kann. Diese Mittel können Telefonie, einen Instant Messaging-Dienst, einen MMS, einen SMS, einen E-Mail-Dienst oder einen Fax-Dienst umfassen. Der erste Benutzer B1 kann die Informationen bezüglich seiner Kommunikationseinheit E1 und deren zugeordneten Kommunikationsvorrichtungen V11 und V12 bzw. der entsprechenden Kommunikationsmittel M111 bzw. M121 und M122 erstellen bzw. zusammenstellen und kann veranlassen, dass diese Informationen in einer Komponente des Kommunikationssystems gespeichert bzw. abgelegt werden. Vorteilhafterweise wird die Verwaltung dieser Informationen bzw. Kommunikationsinformationen der Kommunikationseinheit E1 von einem Präsenz-Dienst, wie beispielsweise einem "Instant Messaging and Presence"-Dienst, übernommen. Es sei bemerkt, daß die Kommunikationsinformationen neben bzw. zusätzlich zu den oben erwähnten Präsenzinformationen, die die Erreichbarkeit einer Kommunikationseinheit bezüglich einer Kommunikationsvorrichtung über ein dieser zugeordnetes Kommunikationsmittel angeben, vielmehr die Gesamtheit oder eine bestimmte Auswahl der Kommunikationsvorrichtungen in Verbindung mit den jeweiligen zugeordneten Kommunikationsmitteln und somit die verfügbaren Kommunikationsmöglichkeiten einer Kommunikationseinheit angeben. Um die Erreichbarkeit der ersten Kommunikationseinheit E1 zu optimieren, werden bestimmte Kommunikationsinformationen I1 zu sogenannten Präsenz-Profilen P1 und P2 zusammengefasst, in denen beispielsweise abhängig von der Tageszeit, vom Wochentag oder vom Aufenthaltsort des Benutzers B1 diejenigen Kommunikationsmittel bzw. Kommunikationsvorrichtungen angegeben sind, über die die erste Kommunikationseinheit E1 und somit der Benutzer B1 bevorzugt oder am Besten erreichbar sind. Neben den Präsenz-Profilen P1 und P2 sind im Kommunikationssystem K ferner sogenannte Übertragungs-Profile W1 und W2 gespeichert bzw. abgelegt, durch die der erste Benutzer B1 festlegen kann, welche Kommunikationsinformationen an ihn von weiteren Kommunikationseinheiten übertragen werden sollen. Dabei können die Übertragungs-Profile W1 und W2 ebenso wieder an die Tageszeit, den Wochentag oder den Aufenthaltsort des Benutzers B1 angepasst werden, um zu gewährleisten, dass ein Benutzer nur diejenigen Kommunikationsinformationen von anderen Kommunikationseinheiten erhält, die seinem (momentanen) Leistungsumfang entsprechen. Der Benutzer B1 kann ferner bestimmte Präsenz-Profile und Übertragungs-Profile zu sogenannten Anwender-Profilen zusammenfassen, wobei, wie es in Figur 2 gezeigt ist, das Präsenz-Profil P1 und das Übertragungs-Profil W1 zu einem Anwender-Profil A1 zusammengefasst worden sind und das Präsenz-Profil P2 und das Übertragungs-Profil W2 zu einem Anwender-Profil A2 zusammengefasst worden sind. Durch Definieren dieser Profile kann der Benutzer B1 auf einfache Weise zum einen Kommunikationsinformationen I1 zur Freigabe (Präsenz-Profile) an andere Kommunikationseinheiten oder zum Empfangen (Übertragungs-Profile) von Kommunikationsinformationen I1 von weiteren Kommunikationseinheiten auf einfache Weise auswählen bzw. aktivieren und später wieder deaktivieren. Durch Verwenden von Anwender-Profilen wird dieser Komfort weiter gesteigert. Insbesondere bei Mobilfunksystemen ist diese Möglichkeit der Auswahl bestimmter Kommunikationsinformationen über vordefinierte Profile vorteilhaft, da eine Aktivierung der Profile nur wenig Ressourcen erfordert.

Die über das Kommunikationssystem bereitgestellten Kommunikationsinformationen der ersten Kommunikationseinheit E1 können dann von einer zweiten Kommunikationseinheit E2 eines zweiten Benutzers B2 abgefragt, übertragen oder verarbeitet werden.

Zuvor jedoch muß der zweite Benutzer B2 mit dem Kommunikationssystem K bzw. der die Kommunikationsinformationen verwaltenden Komponente davon in Kontakt treten, um zu signalisieren, daß er Kommunikationsinformationen des ersten Benutzers B1 oder weiterer Benutzer empfangen möchte. Dies kann er beispielsweise durch entsprechend angepaßte Signalisierungsprozeduren, einen Telefonanruf, durch Senden einer Kurznachricht mittels SMS, durch Senden einer E-Mail usw. zum Kommunikationssystem bewerkstelligen. Eventuell muß sich der zweite Benutzer B2 erst einer Sicherheitskontrolle, wie einer Authentisierung, unterziehen, bevor er eine Berechtigung zum Zugriff auf die Kommunikationsinformationen I1 des ersten Benutzers B1 erhält. Vorteilhafterweise wird die zweite Kommunikationseinheit E2 auch ein oder mehrere Übertragungs-Profile (nicht dargestellt) definiert haben, durch die nur bestimmte Kommunikationsinformationen der ersten Kommunikationseinheit E1 übertragen werden. Wie in der Figur zu sehen ist, ist der zweiten Kommunikationseinheit E2 eine Kommunikationsvorrichtung V21 zugeordnet, der Kommunikationsmittel M211 und M212 zur Verfügung stehen, über die Informationen oder Nachrichten zu dem Kommunikationssystem K oder der ersten Kommunikationseinheit E1 übertragen bzw. von diesen empfangen werden können. Es sei bemerkt, dass die zweite Kommunikationseinheit E2 bzw. der zweite Benutzer B2 entsprechende Profile wie die erste Kommunikationseinheit E1, in dem Kommunikationssystem K hinterlegen bzw. abspeichern kann.

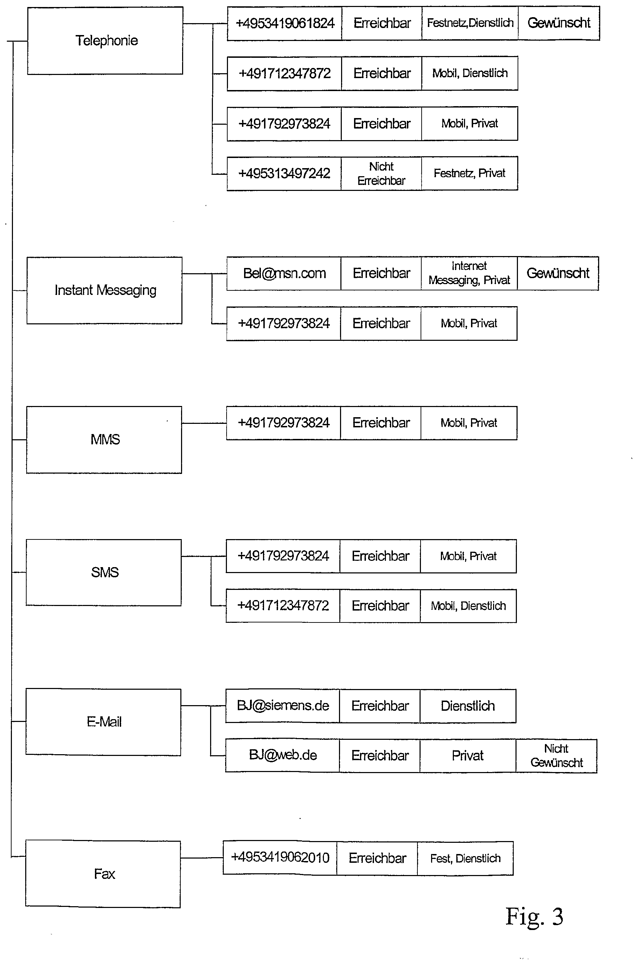

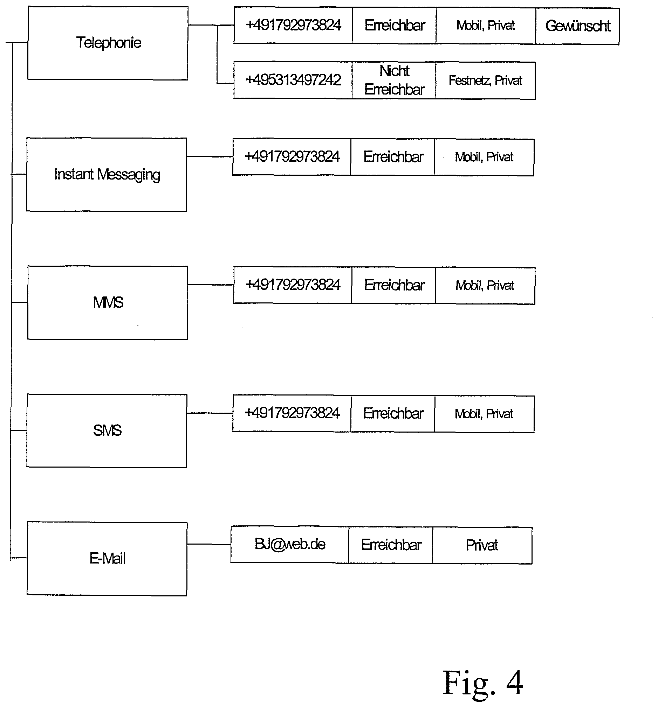

Nach der schematischen Darstellung des Präsenzsystems, das gemäß der vorliegenden Erfindung verwendet wird, sollen nun Ausführungsformen zur Darstellung bzw. Bereitstellung von Kommunikationsinformationen anhand der Figuren 3 und 4 erläutert werden.

Wie es bereits zu Figur 2 erwähnt worden ist, werden die Kommunikationsinformationen einer Kommunikationseinheit vorteilhafterweise in einem Kommunikationssystem gespeichert. In dem Kommunikationssystem, das ein oder mehrere Kommunikationsnetze aufweisen kann, ist beispielsweise ein "Instant Messaging and Presence"-Dienst vorgesehen, von dem die Kommunikationsinformationen verwaltet werden. In einer beispielhaften Darstellung der Kommunikationsinformationen einer Kommunikationseinheit, die einem Benutzer zugeordnet ist, werden die jeweiligen Kommunikationsinformationen in einer Ordnerstruktur angeordnet und nach Kommunikationsmitteln wie "Telefonie", "Instant Messaging", "MMS", "SMS", "E-Mail", und "Fax" sortiert. In der Spalte rechts neben den Kommunikationsmitteln sind die jeweiligen Kommunikationsadressen angegeben, über die abhängig von einer bestimmten Kommunikationsvorrichtung eine Kommunikationsverbindung hergestellt werden kann. So sind beispielsweise neben dem Kommunikationsmittel "Telefonie" die verschiedenen Telefon-Nummern - im Falle von Telefonie über Mobiltelefone insbesondere in Form von MSISDN-Nummern (Mobile Services ISDN Number-Nummern; ISDN: Integrated Service Digital Network) - als Kommunikationsadressen angegeben. In der Spalte rechts neben den Kommunikationsadressen befindet sich zu jedem Kommunikationsmittel eine Erreichbarkeitsinformation, die angibt, ob die Kommunikationseinheit über das jeweilige Kommunikationsmittel "erreichbar" oder "nicht erreichbar" ist.

In der Spalte rechts neben der Erreichbarkeitsinformation ist der Typ des Kommunikationsanschlusses bzw. die Bezeichnung der Kommunikationsvorrichtung angegeben, mit der über ein in der Darstellung links stehendes Kommunikationsmittel und eine links stehende Kommunikationsadresse eine Kommunikationsverbindung herstellbar ist. Durch die Bezeichnungen der Kommunikationsvorrichtungen wie "Festnetz, dienstlich", "Mobil, dienstlich", "Mobil, privat", "Festnetz, privat" kann somit festgestellt werden, ob es sich um ein Festnetztelefon oder Mobiltelefon für dienstliche oder private Zwecke handelt. Die Bezeichnung "Internet Messaging, privat", kann einen tragbaren stationären Computer repräsentieren, der für private Zecke genutzt wird. Ferner kann mit den Begriffen "dienstlich" oder "privat" ausgedrückt werden, dass es sich um tragbare oder stationäre Computer handelt, die für dienstliche oder private Zwecke genutzt werden.

In der Spalte rechts neben den Angaben zu Kommunikationsvorrichtungen ist eine Spalte für Präferenzinformationen vorgesehen (hier 3 Einträge), in denen angegeben ist, über welches Kommunikationsmittel bzw. welche Kommunikationsadresse und somit Kommunikationsvorrichtung der Benutzer es wünscht, kontaktiert zu werden. In dem in Figur 3 dargestellten Fall wünscht der Benutzer, der hier als Presentity zu verstehen ist, lieber über sein dienstliches Festnetztelefon, als über die Mobiltelefone erreicht zu werden. Ferner ist angegeben, dass der private Festnetzanschluss nicht erreichbar ist. Eine explizite Äusserung der Neigungen bezüglich bestimmter Kommunikationsmittel erfolgt anhand von Präferenzattributen, die die Neigungen zu verschiedenen Kommunikationsmitteln verdeutlichen. Die Attributfelder können beispielsweise die Bezeichnungen "gewünscht", "nicht gewünscht" oder "nur in dringenden Fällen" beinhalten. Wie es in Figur 3 gezeigt ist, wünscht der Benutzer entweder über den "Internet Messaging Service" (einem "Sofort-Nachrichtenübertragungs-Dienst" über das Internet) oder über seinen dienstlichen Telefonanschluss kontaktiert zu werden. Zudem möchte er keine E-Mails über seine private E-Mail-Adresse erhalten. Somit kann der Benutzer seine bevorzugten Kommunikationsmittel nennen und die weiteren Kommunikationsvorrichtungen bzw. Endgeräte entsprechend dem Grad der Bevorzugung von oben nach unten auflisten. Wie es bereits oben erwähnt worden ist, können bestimmte Kommunikationsinformationen zu Profilen, in diesem Fall Präsenzprofile, zusammengefasst werden, die beispielsweise an "quasi-statische" Bedingungen des jeweiligen Benutzers, wie Tageszeit, Aufenthaltsort usw. angepasst sind. Die in Figur 3 gezeigte schematische Darstellung der Kommunikationsinformationen kann dabei als Präsenz-Profil mit dem Titel "Büro" bezeichnet werden, das während der Arbeitszeit des Benutzers aktiviert sein kann.

Es sei bemerkt, daß es insbesondere im Fall von mobilen Kommunikationsvorrichtungen, wie Mobiltelefonen, vorteilhaft ist, deren momentanen Standort bzw. das Land oder das Kommunikationsnetz zu kennen, in dem die mobile Kommunikationsvorrichtung eingebucht ist. Diese Standortinformation kann beim Einbuchen in ein Kommunikationsnetz oder durch Positionierungsdienste und dergleichen bestimmt werden und im Fall von mobilen Kommunikationsvorrichtungen in den Kommunikationsinformation diesbezüglich vorgesehen werden (beispielsweise in der Angabe des Aufenthaltslandes "Deutschland", "Australien" usw.). Erkennt beispielsweise ein Benutzer anhand der Kommunikationsinformationen eines weiteren Benutzers, daß sich dieser im Ausland befindet, in dem hohe Mobilfunkkosten bestehen, so kann er davon absehen, den weiteren Benutzer über sein Mobiltelefon zu erreichen, um Kosten zu sparen.

In Figur 4 wird eine weitere Zusammenstellung von Kommunikationsinformationen eines Benutzers bzw. einer diesem zugeordneten Kommunikationseinheit dargestellt, die ein Präsenz-Profil mit dem Titel "Freizeit" repräsentieren, da keine Angaben zu dienstlichen Kommunikationsmitteln bzw. Kommunikationsvorrichtungen vorgesehen sind. Da die Bedeutung der einzelnen Spalten bzw. Zeilen bereits bezüglich Figur 3 erläutert worden ist, wird eine nähere Erläuterung der Figur 4 weggelassen.

Es ist möglich, dass der Benutzer die entsprechenden Kommunikationsinformationen in einer seiner Kommunikationsvorrichtungen erstellt, editiert und dann über das Kommunikationssystem veröffentlicht. Wie bereits erwähnt, ist es vorteilhaft, die Kommunikationsinformationen sowie die oben erläuterten Profile (Präsenz-Profil, Übertragungs-Profil, Anwender-Profil) auf einem sogenannten Präsenz-Server ("Presence Server") eines Präsenz-Dienstes, wie eines "Instant Messaging and Presence"-Dienstes, der als eine Komponente des Kommunikationssystems vorgesehen ist, zu hinterlegen. Der Präsenz-Server kann dabei beispielsweise in einem Mobilfunknetz als Teil eines HLR (HLR: Home Location Register), d.h. einer datenbankgestützten Verarbeitungseinheit, die die Hauptdaten der Teilnehmer eines PLMN (PLMN: Public Land Mobile Network) enthält, oder aber auch als eine eigenständige Vorrichtung in einem Mobilfunknetz bzw. einem anderen Kommunikationsnetz ausgebildet sein. Insbesondere, wenn der Benutzer ein Mobiltelefon aufweist, so kann er mit geringem Ressourcenaufwand über die Luftschnittstelle einen Befehl zu dem Präsenz-Server senden, um ein voreingestelltes Profil zu aktivieren, so dass bestimmte Kommunikationsinformationen an einen weiteren Benutzer (Watcher) weitergeleitet werden können.

Wie bereits erwähnt, hat ein Benutzer bei dem erfindungsgemäßen Präsenz-System die Möglichkeit, alle Kommunikationsinformationen oder nur eine Teilmenge daraus über das Kommunikationssystem zu veröffentlichen. Dabei ermöglicht die erste Variante (alle Kommunikationsinformationen zu veröffentlichen), einem weiteren Benutzer (Watcher) einen gesamten Überblick über die Möglichkeiten des ersten Benutzers (Presentity) zu haben. In einem solchen Fall könnten auch Informationen über momentan nicht erreichbare Kommunikationsvorrichtungen bzw. Endgeräte nützlich sein. Beispielsweise kann sich der zweite Benutzer entscheiden, eine E-Mail an das private Postfach des ersten Benutzers zu senden, obwohl letzterer angegeben hat, dass er zur Zeit über diese E-Mail-Adresse nicht erreichbar ist, und folglich die E-Mail nicht sofort lesen wird. Entsprechend ist es vorteilhaft, wenn der zweite Benutzer je nach Wunsch und vorhandenen Ressourcen, entweder alle Präsenzinformationen des ersten Benutzers anfordern kann, oder beispielsweise nur die Informationen mit Bezug auf zur Zeit erreichbare Kommunikationsmittel bzw. Kommunikationsvorrichtungen. Eine weitere Möglichkeit der Selektion von abzurufenden Kommunikationsinformationen (beispielsweise in einem Übertragungsprofil) kann mit Bezug auf Kommunikationsmittel geschehen, wobei der zweite Benutzer nur Informationen zu solchen Kommunikationsmitteln anfordern kann, die seine Kommunikationsgeräte unterstützen. Beispielsweise könnten Informationen bezüglich MMS irrelevant sein, wenn der zweite Benutzer keine MMS-fähige Kommunikationsvorrichtung hat.

Wünscht nun der zweite Benutzer, der als Benutzer B2 in Figur 2 bezeichnet ist, Kommunikationsinformationen des ersten Benutzers B1 abzufragen, so kann er von seiner Kommunikationsvorrichtung V21 einen Abfragebefehl zu dem Kommunikationssystem K (insbesondere dem in diesem vorgesehenen Präsenz-Dienst) senden, das ihm dann alle oder ausgewählte Kommunikationsinformationen auf seine Kommunikationsvorrichtung V21 überträgt. Vorteilhafterweise weist diese Kommunikationsvorrichtung dann eine mehrzeilige Anzeige auf, auf der dann die möglichen Kommunikationsmöglichkeiten zur ersten Kommunikationseinheit E1 übersichtlich darstellbar sind. Es ist auch denkbar, daß der zweiten Kommunikationseinheit E2 bzw. dem zweiten Benutzer B2 automatisch die Kommunikationsinformationen der ersten Kommunikationseinheit E1 übertragen werden, wenn diese geändert worden sind.

Entsprechend stehen dem ersten Benutzer B1 Kommunikationsvorrichtungen V11 und V12 zur Verfügung, um die Kommunikationsinformationen zur ersten Kommunikationseinheit I1 zu erstellen, zu editieren und diese mittels einer entsprechenden Einrichtung zu dem Kommunikationssystem K zu übertragen. Um die Kommunikationsinformationen übersichtlich darzustellen und ein Editieren zu erleichtern ist es vorteilhaft, wenn die entsprechende Kommunikationsvorrichtung des Benutzers B1 ebenfalls eine mehrzeilige Anzeige aufweist. Ferner ist es vorteilhaft, wenn eine Kommunikationsvorrichtung des ersten Benutzers B1 eine Einrichtung zum Zusammenfassen der Kommunikationsinformationen zu Profilen aufweist, die oben bereits erläutert worden sind. Hat der erste Benutzer B1 Profile erstellt, so ist es weiterhin vorteilhaft, wenn eine der Kommunikationsvorrichtungen eine Einrichtung zum Auswählen bzw. Aktivieren der Profile in dem Kommunikationssystem aufweist.

## Patentansprüche

1. Verfahren zur Verbesserung der Erreichbarkeit von Teilnehmern eines Kommunikations systems, demgemäß von einem Teilnehmer (B1) des Kommunikationssystem über eine erste Kommunikationseinheit (E1) mindestens ein Präsenzprofil des Teilnehmers (B1) erstellt wird, wobei
- das Profil jeweils Kommunikationsmöglichkeiten beschreibt, über die eine Kommunikationsverbindung mit der ersten Kommunikationseinheit herstellbar ist,
- das Profil im Netz des Kommunikationssystems abgespeichert wird,
- das Profil vom Teilnehmer aktiviert oder deaktiviert wird und
- das Profil im aktivierten Zustand durch das Netz anderen Benutzern des Kommunikationssystems zur Verfügung gestellt wird.

2. Verfahren nach Anspruch 1, bei dem der ersten Kommunikationseinheit (E1) eine Mehrzahl von Kommunikationsvorrichtungen (V11, V12) zugeordnet werden, die in den Angaben über Kommunikationsmöglichkeiten dargestellt werden.

3. Verfahren nach Anspruch 2, bei dem jeder der Kommunikationsvorrichtungen (V11, V12) jeweils ein oder mehrere Kommunikationsmittel (M111, M121, M122) zugeordnet werden, die in den Angaben über Kommunikationsmöglichkeiten dargestellt werden.

4. Verfahren nach Anspruch 3, bei dem jedem der Kommunikationsmittel (M111, M121, M122) eine Kommunikationsadresse zugeordnet wird, die in den Angaben über Kommunikationsmöglichkeiten dargestellt wird.

5. Verfahren nach Anspruch 3 oder 4, bei dem jedem der Kommunikationsmittel (M111, M121, M122) eine Erreichbarkeitsinformation zugeordnet wird, die angibt, ob zum aktuellen Zeitpunkt eine Kommunikationsverbindung über das Kommunikationsmittel mit der ersten Kommunikationseinheit (E1) herstellbar ist, wobei die Erreichbarkeitsinformation in den Angaben über Kommunikationsmöglichkeiten dargestellt wird.

6. Verfahren nach einem der Ansprüche 3 bis 5, bei dem einem oder mehreren der Kommunikationsmittel (M111, M121, M122) eine Präferenzinformation zugeordnet wird, die angibt, über welches Kommunikationsmittel bevorzugt eine Kommunikationsverbindung zu der ersten Kommunikationseinheit (E1) herzustellen ist, wobei die Präferenzinformation in den Angaben über Kommunikationsmöglichkeiten dargestellt wird.

7. Verfahren nach einem der Ansprüche 1 bis 6, bei dem die Kommunikationsinformationen (I1) der ersten Kommunikationseinheit ferner Benutzerinformationen bezüglich des der ersten Kommunikationseinheit zugeordneten Benutzers (B1) aufweisen.

8. Verfahren nach einem der Ansprüche 1 bis 7, bei dem eine Auswahl von Kommunikationsvorrichtungen (V11, V12) und/oder eine Auswahl von Kommunikationsmitteln (M111, M121, M122) und/oder die Benutzerinformationen in einem Präsenzprofil (P1, P2) zusammengefasst werden, die zur Abfrage durch eine zweite Kommunikationseinheit (E2) freigegeben werden.

9. Verfahren nach Anspruch 8, bei dem der ersten Kommunikationseinheit (E1) eine Mehrzahl von verschiedenen Präsenzprofilen (P1, P2) zugeordnet wird.

10. Verfahren nach Anspruch 8, bei dem die zweite Kommunikationseinheit (E2) ein Authentisierungsverfahren durchläuft, bevor die Kommunikationsinformationen (I1) abgefragt werden.

11. Verfahren nach einem der Ansprüche 8 bis 10, bei dem der zweiten Kommunikationseinheit (E2) ein oder mehrere Übertragungs-Profile zugeordnet wird, in dem eine Auswahl bestimmter Kommunikationsvorrichtungen und/oder Kommunikationsmittel und/oder Benutzerinformationen angegeben sind, über die Angaben aus Kommunikationsinformationen der ersten oder einer weiteren Kommunikationseinheit zur zweiten Kommunikationseinheit (E2) bei der Abfrage übertragen werden sollen.

12. Verfahren nach Anspruch 11, bei dem der ersten Kommunikationseinheit (E1) ein oder mehrere Übertragungsprofile (W1, W2) zugeordnet werden, in denen eine Auswahl bestimmter Kommunikationsvorrichtungen und/oder Kommunikationsmittel und/oder Benutzerinformationen angegeben sind, über die Angaben aus Kommunikationsinformationen einer anderen Kommunikationseinheit zur ersten Kommunikationseinheit (E1) übertragen werden sollen.

13. Verfahren nach Anspruch 12, bei dem der ersten Kommunikationseinheit (E1) ein oder mehrere Anwender-Profile (A1, A2) zugeordnet werden, die jeweils aus einem bestimmten Präsenzprofil (P1, P2) und einem bestimmten Übertragungs-Profil (W1, W2) bestehen.

14. Verfahren nach einem der Ansprüche 1 bis 13, bei dem die Kommunikationsinformationen (I1) der ersten Kommunikationseinheit (E1), die Präsenzprofile (P1, P2), die Übertragungs-Profile (W1, W2) und/oder die Anwender-Profile (A1, A2) in dem Kommunikationssystem (K) gespeichert sind.

15. Verfahren nach einem der Ansprüche 9 bis 14, bei dem ein bestimmtes der Präsenzprofile (P1, P2) und/oder Übertragungs-Profile (W1, W2) und/oder die Anwender-Profile (A1, A2) zur Bereitstellung über das Kommunikationssystem (K) von einem der ersten Kommunikationseinheit (E1) zugeordneten Benutzer (B1) ausgewählt wird.

16. Verfahren nach einem der Ansprüche 9 bis 14, bei dem ein bestimmtes der Präsenzprofile (P1, P2) und/oder Übertragungs-Profile (W, W2) und/oder die Anwender-Profile (A1, A2) zur Bereitstellung über das Kommunikationssystem (K) nach einerm bestimmten quasi-statischen Bedingung des Benutzers von dem Kommunikationssystem (K) ausgewählt wird.

17. Verfahren nach Anspruch 16, bei dem die quasi-statische Bedingung des Benutzers durch die Tageszeit, den Wochentag, oder den Aufenthaltsort eines der ersten Kommunikationseinheit (E1) zugeordneten Benutzers (B1) repräsentiert ist.

18. Verfahren nach einem der Ansprüche 7 bis 17, bei dem die Benutzerinformationen den geistigen oder körperlichen Zustand des Benutzers umfassen.

19. Verfahren nach einem der Ansprüche 1 bis 18, bei dem eine der Kommunikationsvorrichtungen (V11, V112, V21) ein Mobilfunktelefon, ein Festnetztelefon, einen tragbaren Computer, einen stationären Computer oder einen Pager umfasst.

20. Verfahren nach einem der Ansprüche 1 bis 19, bei dem eines der Kommunikationsmittel (M111, M121, M122, M211, M212) Telefonie, einen Instant Messaging-Dienst, einen MMS, einen SMS, E-Mail-Dienst oder einen Fax-Dienst umfasst.

21. Verfahren nach einem der Ansprüche 1 bis 20, bei dem das Kommunikationssystem (K) ein Mobilfunknetz, ein Telefonnetz und/oder ein internetprotokollbasiertes Kommunikationsnetz aufweist.

22. Verfahren nach einem der Ansprüche 1 bis 21, bei dem das Kommunikationssystem (K) einen Präsenz-Dienst aufweist.

23. Kommunikations system (K), insbesondere zum Umsetzen des Verfahrens nach einem der Ansprüche 1 bis 22, das eine Komponente aufweist, in der Präsenzprofile speicherbar sind, wobei ein Profil eines Teilnehmer (B1) jeweils Angaben über Kommunikationsmöglichkeiten (M111, M121, M122; V11, V12) beschreibt, über die eine Kommunikationsverbindung zu einer Kommunikationseinheit (E1) Teilnehmers (B1) herstellbar ist, und die das gespeicherte Profil eines Teilnehmer (B1) in Abhängigkeit eines Befehls des Teilnehmers (B1) oder einem bestimmten Kriterium aktiviert und dadurch anderen Teilnehmern des Kommunikationssystems zur Verfügung stellt.

24. Kommunikationssystem nach Anspruch 23, bei dem in der einen Komponente ein oder mehrere Präsenzprofile (P1, P2) speicherbar sind, die aus einer der ersten Kommunikationseinheit (E1) zugeordneten Auswahl von Kommunikationsvorrichtungen (V11, V12) und/oder einer Auswahl von Kommunikationsmitteln (M111, M121, M122) und/oder Benutzerinformationen über den ersten Benutzer (B1) bestehen und als die Kommunikationsinformationen (I1) der ersten Kommunikationseinheit (E1) bereitstellbar sind.

25. Kommunikationssystem nach Anspruch 23 oder 24, bei dem in der einen Komponente ein oder mehrere Übertragungs-Profile (W1, W2) speicherbar sind, in denen eine Auswahl bestimmter Kommunikationsvorrichtungen und/oder Kommunikationsmittel und/oder Benutzerinformationen angegeben sind, über die Angaben aus Kommunikationsinformationen einer anderen Kommunikationseinheit zur ersten Kommunikationseinheit (E1) übertragen werden sollen.

26. Kommunikationssystem nach einem der Ansprüche 23 bis 25, bei dem in der einen Komponente ein oder mehrere Anwender-Profile (A1, A2) speicherbar sind, die jeweils aus einem bestimmten Präsenzprofil (P1, P2) und einem bestimmten Übertragungs-Profil (W1, W2) bestehen.

27. Kommunikationssystem nach einem der Ansprüche 24 bis 26, das ferner eine Auswahleinrichtung aufweist, durch die eines oder mehrere der Profile, die in der einen Komponente gespeichert sind, zur Bereitstellung über das Kommunikationssystem (K) auswählbar ist.

28. Kommunikationssystem nach Anspruch 27, bei dem die Auswahleinrichtung eine Auswahl auf Anweisung des ersten Benutzers (B1) hin oder automatisch in Abhängigkeit der quasi-statischen Bedingungen des Benutzers insbesondere Tageszeit, Wochentag, oder Aufenthaltsort des ersten Benutzers (B1) hin durchführt.

29. Kommunikationsvorrichtung eines Kommunikationssystems zum Umsetzen des Verfahrens nach einem der Ansprüche 1 bis 22, mit
- Mitteln zum Erstellen eines Präsenzprofils eines Benutzers der Kommunikationsvorrichtung, wobei das Profil Kommunikationsmöglichkeiten beschreibt, über die eine Kommunikationsverbindung mit der Kommunikationsvorrichtung herstellbar ist,
- Mitteln zur Übertragung des Profils an eine Netzeinrichtung des Kommunikationssystems
und
- Mitteln zur Aktivierung des Profils auf dem Server.

30. Kommunikationsvorrichtung nach Anspruch 29, die ferner eine Einrichtung zum Anzeigen und Verändern der Kommunikationsinformationen (I1) einer Kommunikationseinheit (E1) aufweisen.

31. Kommunikationsvorrichtung nach Anspruch 29 oder 30, die ferner eine Einrichtung zum Zusammenfassen bestimmter der Kommunikationsinformationen (I1) einer Kommunikationseinheit (E1) zu Profilen (P1, P2, W1, W2, A1, A2) aufweist.

32. Kommunikationsvorrichtung nach Anspruch 31, die ferner eine Einrichtung zum Auswählen eines oder mehrerer der Profile (P1, P2, W1, W2, A1, A2) aufweist.

## Claims

1. Method for improving the accessibility of subscribers to a communication system, accordingly at least one presence profile of the subscriber (B1) is compiled by a subscriber (B1) of the communication system via a first communication unit (E1), wherein
- the profile in each case describes communication possibilities, via which a communication connection to the first communication unit can be set up,
- the profile is stored in the network of the communication system,
- the profile is activated or deactivated by the subscriber and
- the profile is made available in the activated state by the network of other users of the communication system.

2. Method according to claim 1, wherein a plurality of communication devices (V11, V12) assigned to the first communication unit (E1) are shown in the indications on communication possibilities.

3. Method according to claim 2, wherein one or more communication means (M111, M121, M122) assigned to each communication device (V11, V12) are shown in the indications on communication possibilities in each case.

4. Method according to claim 3, wherein each one of the communication means (M111, M121, M122) assigned to a communication address are shown in the indications on communication possibilities.

5. Method according to claim 3 or 4, wherein each one of the communication means (M111, M121, M122) is assigned accessibility information that indicates whether or not a communication connection via the communication means can be set up to the first communication unit (E1) at the current point in time in which case the accessibility information is shown in the indications on communication possibilities.

6. Method according to one of claims 3 to 5, wherein one or more communication means (M111, M121, M122) are assigned to preference information that indicates via which communication means a communication connection to the first communication unit (E1) must preferably be set up in which case the preference information is shown in the indications on the communication possibilities.

7. Method according to one of claims 1 to 6, wherein the communication information (I1) of the first communication unit also has user information with respect to the user (B1) assigned to the first communication unit.

8. Method according to one of claims 1 to 7, wherein a selection of communication devices (V11, V12) and/or a selection of communication means (M111, M121, M122) and/or the user information is compiled into a presence profile (P1, P2) that is released for requesting by a second communication unit (E2).

9. Method according to claim 8, wherein a plurality of different presence profiles (P1, P2) is assigned to the first communication unit (E1).

10. Method according to claim 8, wherein the second communication unit (E2) passes through an authorising process before the communication information (I1) is requested.

11. Method according to one of claims 8 to 10, wherein the second communication unit (E2) is assigned to one or more watcher profiles in which a selection of specific communication devices and/or communication means and/or user information is indicated via which indications on the communication information of the first or a further communication unit should be sent to the second communication unit (E2) during the request.

12. Method according to claim 11, wherein the first communication unit (E1) is assigned to one or more watcher profiles (W1, W2) in which a selection of specific communication devices and/or communication means and/or user information is indicated via which indications on communication information of another communication unit should be sent to the first communication unit (E1).

13. Method according to claim 12, wherein the first communication unit (E1) is assigned to one or more client profiles (A1, A2) that in each case consist of a specific presence profile (P1, P2) and a specific watcher profile (W1, W2) .

14. Method according to one of claims 1 to 13, wherein the communication information (I1) of the first communication unit (E1), the presence profiles (P1, P2), the watcher profiles (W1, W2) and/or the client profiles (A1, A2) are stored in the communication system (K).

15. Method according to one of claims 9 to 14, wherein a specific presence profile (P1, P2) and/or watcher profile (W1, W2) and/or the client profile (A1, A2) is selected from a user (B1) assigned to one of the first communication units (E1) to be provided via the communication system (K).

16. Method according to one of claims 9 to 14, wherein a specific presence profile (P1, P2) and/or watcher profile (W, W2) and/or the client profile (A1, A2) is selected according to a specific quasi-static condition of the user from the communication system (K) to be provided via the communication system (K).

17. Method according to claim 16, wherein the quasi-static condition of the user is represented by the time of day, the day of the week or the place of residence of a user (B1) assigned to the first communication unit (E1).

18. Method according to one of claims 7 to 17, wherein the user information includes the emotional or physical state of the user.

19. Method according to one of claims 1 to 18, wherein one of the communication devices (V11, V112, V21) has a mobile telephone, a fixed network telephone, a portable computer, a stationary computer or a pager.

20. Method according to one of claims 1 to 19, wherein one of the communication means (M111, M121, M122, M211, M212) has telephony, an instant messaging service, an MMS, an SMS, e-mail service or a fax service.

21. Method according to one of claims 1 to 20, wherein the communication system (K) has a cellular phone network, a telephone network and/or an Internet protocol-based communication network.

22. Method according to one of claims 1 to 21, wherein the communication system (K) has a presence service.

23. Communication system (K) particularly for carrying out said method according to one of claims 1 to 22 that has a component in which presence profiles can be stored, wherein a profile of a subscriber (B1) describes in each case indications on communication possibilities (M111, M121, M122; V11, V12) via which a communication connection with a first communication unit (E1) of the subscriber (B1) can be set up and which activates the stored profile of a subscriber (B1) as a function of a command by the subscriber (B1) or a specific criterion and, as a result, makes it available to other subscribers in the communication system.

24. Communication system according to claim 23, wherein one or more presence profiles (P1, P2) can be stored in one of the components that consist of a selection of communication devices (V11, V12) assigned to the first communication unit (E1) and/or a selection of communication means (M111, M121, M122) and/or user information about the first user (B1) and can be provided as the communication information (I1) of the first communication unit (E1) .

25. Communication system according to claim 23 or 24, wherein one or more watcher profiles (W1, W2) can be stored in one of the components in which a selection of specific communication devices and/or communication means and/or user information is indicated via which indications on the communication information of a further communication unit should be sent to a first communication unit (E1).

26. Communication system according to one of claims 23 to 25, wherein one or more client profiles (A1, A2) can be stored in one of the components that in each case consist of a specific presence profile (P1, P2) and a specific watcher profile (W1, W2) .

27. Communication system according to one of claims 24 to 26 that also has a selection device by means of which one or more profiles that are stored in one of the components can be selected to be provided via the communication system (K).

28. Communication system according to claim 27, wherein the selection device makes a selection on the instruction of the first user (B1) or automatically depending on the quasi-static conditions of the user, in particular the time of day, the day of the week, or the location of the first user (B1).

29. Communication device of a communication system for carrying out said method according to one of claims 1 to 22, with
- means for compiling a presence profile of a user of the communication device, wherein the profile describes communication possibilities, via which a communication connection with the communication device can be set up,
- means for transferring the profile to a network device of the communication system and
- means for activating the profile on the server.

30. Communication device according to claim 29 that also has a device for displaying and changing the communication information (I1) of a communication unit (E1).

31. Communication device according to claim 29 or 30 that also has a device for compiling the specific communication information (I1) of a communication unit (E1) into profiles (P1, P2, W1, W2, A1, A2).

32. Communication device according to claim 31 that also has a device for selecting one or more profiles (P1, P2, W1, W2, A1, A2) .

## Revendications

1. Procédé d'amélioration de l'accessibilité de participants du système de communication, en fonction duquel au moins un profil de présence du participant (B1) est créé par un participant (B1) du système de communication par une première unité de communication (E1),
- le profil décrivant respectivement des possibilités de communication, au moyen desquelles une liaison de communication avec la première unité de communication peut être établie,
- le profil est mémorisé dans le réseau du système de communication,
- le profil du participant est activé ou désactivé, et
- le profil est mis, à l'état activé, par le réseau à la disposition d'autres utilisateurs du système de communication.

2. Procédé selon la revendication 1, dans lequel une pluralité d'appareils de communication (V11, V12) est affectée à la première unité de communication (E1), lesquelles figurent dans les indications sur les possibilités de communication.

3. Procédé selon la revendication 2, dans lequel à chacun des dispositifs de communication (V11, V12) est respectivement affecté un ou plusieurs moyens de communication (M111, M121, M122) qui figurent dans les indications sur les possibilités de communication.

4. Procédé selon la revendication 3, dans lequel à chacun des moyens de communication (M111, M121, M122) est affectée une adresse de communication qui figure dans les indications sur les possibilités de communication.

5. Procédé selon la revendication 3 ou 4, dans lequel à chacun des moyens de communication (M111, M121, M122) sont affectées des informations d'accessibilité qui indiquent si, au moment même, une liaison de communication peut être établie par le moyen de communication avec la première unité de communication (E1), les informations d'accessibilité figurant dans les indications sur les possibilités de communication.

6. Procédé selon l'une des revendications 3 à 5, dans lequel une information de préférence est affectée à l'un ou à plusieurs des moyens de communication (M111, M121, M122) qui indique par quel moyen de communication doit de préférence être établie une liaison de communication à la première unité de communication (E1), l'information de préférence figurant dans les indications sur les possibilités de communication.

7. Procédé selon l'une des revendications 1 à 6, dans lequel les informations de communication (I1) de la première unité de communication présentent en outre des informations d'utilisateur relatives à l'utilisateur (B1) affecté à la première unité de communication.

8. Procédé selon l'une des revendications 1 à 7, dans lequel une sélection de dispositifs de communication (V11, V12) et/ou une sélection de moyens de communication (M111, M121, M122) et/ou les informations d'utilisateur sont rassemblées dans un profil de présence (P1, P2) qui sont fournies pour interrogation par une deuxième unité de communication (E2).

9. Procédé selon la revendication 8, dans lequel une pluralité de différents profils de présence (P1, P2) est affectée à la première unité de communication (E1).

10. Procédé selon la revendication 8,
dans lequel la deuxième unité de communication (E2) est soumise à un processus d'authentification avant que les informations de communication (I1) ne soient sujettes à interrogation.

11. Procédé selon l'une des revendications 8 à 10, dans lequel un ou plusieurs profils de transmission sont affectés à la deuxième unité de communication (E2) dans lequel une sélection de certains dispositifs de communication et/ou de moyens de communication et/ou d'informations d'utilisateur sont indiquées, à propos desquels des indications venant d'informations de communication de la première ou d'une autre unité de communication doivent être transmises à la deuxième unité de communication (E2) lors de l'interrogation.

12. Procédé selon la revendication 11, dans lequel un ou plusieurs profils de transmission (W1, W2) sont affectés à la première unité de communication (E1), dans lesquels une sélection de certains appareils de communication et/ou de moyens de communication et/ou d'informations d'utilisateur est indiquée, à propos desquels des indications d'informations de communication d'une autre unité de communication sont transmises à la première unité de communication (E1).

13. Procédé selon la revendication 12, dans lequel un ou plusieurs profils d'usager (A1, A2) sont affectés à la première unité de communication (E1) qui sont respectivement constitués d'un certain profil de présence (P1, P2) et d'un certain profil de transmission (W1, W2).

14. Procédé selon l'une des revendications 1 à 13, dans lequel les informations de communication (I1) de la première unité de communication (E1), les profils de présence (P1, P2), les profils de transmission (W1, W2) et/ou les profils d'usager (A1, A2) sont mémorisés dans le système de communication (K).

15. Procédé selon l'une des revendications 9 à 14, dans lequel un certain des profils de présence (P1, P2) et/ou des profils de transmission (W1, W2) et/ou des profils d'usager (A1, A2) est sélectionné, à disponibilité par le biais du système de communication (K), par un utilisateur (B1) affecté à la première unité de communication (E1).

16. Procédé selon l'une des revendications 9 à 14, dans lequel un certain des profils de présence (P1, P2) et/ou des profils de transmission (W, W2) et/ou des profils d'usager (A1, A2) est sélectionné, à disponibilité par le biais du système de communication (K), selon une certaine condition quasi-statique de l'utilisateur par le système de communication (K).

17. Procédé selon la revendication 16, dans lequel la condition quasi-statique de l'utilisateur est représentée par le moment de la journée, le jour de la semaine ou le lieu de séjour d'un utilisateur (B1) affecté à la première unité de communication (E1).

18. Procédé selon l'une des revendications 7 à 17, dans lequel les informations d'utilisateur comprennent l'état mental ou physique de l'utilisateur.

19. Procédé selon l'une des revendications 1 à 18, dans lequel un des dispositifs de communication (V11, V112, V21) comprend un téléphone mobile, un téléphone fixe, un ordinateur portable, un ordinateur de bureau ou un téléavertisseur.

20. Procédé selon l'une des revendications 1 à 19, dans lequel l'un des moyens de communication (M111, M121, M122, M211, M212) comprend le téléphone, un service instantané de messagerie, un MMS, un texto, un service e-mail ou un service de télécopie.

21. Procédé selon l'une des revendications 1 à 20, dans lequel le système de communication (K) possède un réseau mobile, un réseau téléphonique et/ou un réseau de communication basé sur un protocole internet.

22. Procédé selon l'une des revendications 1 à 21, dans lequel le système de communication (K) possède un service de présence.

23. Système de communication (K), en particulier pour la mise en oeuvre du procédé selon l'une des revendications 1 à 22, présentant un composant dans lequel les profils de présence peuvent être mémorisés,
le profil d'un participant (B1) décrivant respectivement les indications sur les possibilités de communication (M111, M121, M122; V11, V12), par le biais desquelles une liaison de communication peut être établie à une unité de communication (E1) d'un participant (B1) et
le profil mémorisé d'un participant (B1) s'active en fonction d'un ordre du participant (B1) ou d'un certain critère et ainsi le met à disposition d'autres participants du système de communication.

24. Système de communication selon la revendication 23, dans lequel, dans le composant, peuvent être mémorisés un ou plusieurs profils de présence (P1, P2) qui sont constitués de la sélection affecté à la première unité de communication (E1) de dispositifs de communication (V11, V12) et/ou d'une sélection de moyens de communication (M111, M121, M122) et/ou d'informations d'utilisateur sur le premier utilisateur (B1) et peuvent être mises à disposition comme informations de communication (I1) de la première unité de communication (E1).

25. Système de communication selon la revendication 23 ou 24, dans lequel, dans le composant, un ou plusieurs profils de transmission (W1, W2) peuvent être mémorisés, dans lesquels une sélection de certains dispositifs de communication et/ou de moyens de communication et/ou informations d'utilisateur sont indiqués, par le biais desquels les indications d'informations de communication d'une autre unité de communication peuvent être transmises à la première unité de communication (E1).

26. Système de communication selon l'une des revendications 23 à 25, dans lequel, dans le composant, un ou plusieurs profils d'usager (A1, A2) peuvent être mémorisés, lesquels sont respectivement constitués d'un certain profil de présence (P1, P2) et d'un certain profil de transmission (W1, W2).

27. Système de communication selon l'une des revendications 24 à 26, présentant en outre un appareil de sélection par lequel un ou plusieurs des profils, mémorisés dans le composant peut être sélectionné à disponibilité par le système de communication (K) .

28. Système de communication selon la revendication 27, dans lequel l'appareil de sélection exécute, sur instruction du premier utilisateur (B1) ou automatiquement en fonction des conditions quasi-statiques de l'utilisateur, une sélection en particulier le moment de la journée, le jour de la semaine ou le lieu de séjour du premier usager (B1).

29. Dispositif de communication d'un système de communication pour la mise en oeuvre du procédé selon l'une des revendications 1 à 22,
avec
- des moyens pour créer le profil de présence d'un utilisateur du dispositif de communication, le profil décrivant des possibilités de communication par le biais desquelles une liaison de communication peut être établie avec le dispositif de communication,
- des moyens de transmission du profil à un appareil de réseau du système de communication, et
- des moyens pour activer le profil sur le serveur.

30. Appareil de communication selon la revendication 29 possédant en outre un appareil d'indication et de modification des informations de communication (I1) d'une unité de communication (E1).

31. Appareil de communication selon la revendication 29 ou 30 qui présente en outre un appareil de rassemblement de certaines des informations de communication (I1) d'une unité de communication (E1) relatives à des profils (P1, P2, W1, W2, A1, A2).

32. Appareil de communication selon la revendication 31 présentant en outre un appareil de sélection d'un ou de plusieurs des profils (P1, P2, W1, W2, A1, A2).
